(19) Europäisches Patentamt
European Patent Office
Office européen des brevets

(11) EP 1 990 352 A1

(12) **EUROPEAN PATENT APPLICATION**
published in accordance with Art. 158(3) EPC

(43) Date of publication:
**12.11.2008 Bulletin 2008/46**

(21) Application number: **07714204.0**

(22) Date of filing: **14.02.2007**

(51) Int Cl.:
***C08F 10/02*** *(2006.01)* ***B32B 27/32*** *(2006.01)*
***C08J 5/18*** *(2006.01)* ***C08L 23/08*** *(2006.01)*

(86) International application number:
**PCT/JP2007/052651**

(87) International publication number:
**WO 2007/094378 (23.08.2007 Gazette 2007/34)**

(84) Designated Contracting States:
**BE DE**

(30) Priority: **15.02.2006 JP 2006038342**
**15.02.2006 JP 2006038343**

(71) Applicants:
- **Mitsui Chemicals, Inc.**
**Tokyo 105-7117 (JP)**
- **Prime Polymer Co., Ltd.**
**Tokyo 105-7117 (JP)**

(72) Inventors:
- **TASAKI, Tsutomu**
**Ichihara-shi, Chiba 299-0108 (JP)**
- **AKASHI, Takahiro**
**Ichihara-shi, Chiba 299-0108 (JP)**
- **MATSUBARA, Shinya**
**Ichihara-shi, Chiba 299-0108 (JP)**
- **OKAMOTO, Masahiko**
**Sodegaura-shi, Chiba 299-0265 (JP)**

(74) Representative: **Cresswell, Thomas Anthony**
**J.A. KEMP & CO.**
**14 South Square**
**Gray's Inn**
**London**
**WC1R 5JJ (GB)**

# (54) ETHYLENE POLYMER AND PRODUCTS OF MOLDING THEREOF

(57) An ethylene-α-olefin copolymer for a film or sheet satisfying the following requirements [1] to [5] simultaneously is excellent in transparency and moldability and is suitably used for a film or sheet excellent in mechanical strength.
[1] The density (d) is in the range of 890 to 980 kg/$m^3$.
[2] The intrinsic viscosity ([η]) measured at 135°C in decalin is in the range of 0.5 to 10 dl/g.
[3] The ratio of weight average molecular weight (Mw) to number average molecular weight (Mn) (Mw/Mn) measured by GPC is in the range of 2.0 to 50.
[4] In an elution temperature-elution amount curve given by cross fractionation chromatography (CFC), the difference between a temperature at which the integrated elution amount is 1% by mass and a temperature at which the integrated elution amount is 40% by mass is 12°C or less, wherein the total elution amount is 100% by mass.
[5] The amount of a component soluble in decane is 0.5% by mass or less.



Printed by Jouve, 75001 PARIS (FR)

## Description

[TECHNICAL FIELD]

The present invention relates to an ethylene-α-olefin copolymer, and more specifically, to an ethylenic polymer which is excellent in moldability and is suitably used for molded articles including films excellent in transparency and mechanical strength, and to a molded article and a film obtained therefrom.

[BACKGROUND ART]

Ethylenic copolymers require various properties depending on how they are molded or used. For example, ethylenic copolymers are formed into films by various molding methods and are used for wide applications in many fields. Types of the films vary depending on what they will contain, and the films show various properties depending on the types and amounts of monomer units constituting the ethylenic copolymer or depending on the production method of the ethylenic copolymer.

For example, when an ethylenic copolymer is formed into an inflation film at high speed, the copolymer should have a high melt tension (MT: melt tension) for its molecular weight in order to ensure stable high speed molding without fluttering or tearing of bubble. Similar characteristics are required in order to prevent sagging or tearing in blow molding, or to minimize width shortage in T-die molding.

Ziegler-catalyzed linear low-density ethylene-1-butene copolymers give films excellent in transparency and surface smoothness. However, the films have low mechanical strength shown by dart impact strength and Elmendorf tear strength and have a low melt tension. Consequently, the films are easily broken during the molding and thus increasing the molding speed is limited. Japanese Patent Application Laid-Open Publication Nos. S56-90810 and S60-106806 disclose methods for improving moldability by improving the melt tension and blow ratio (die/swell ratio) of ethylenic polymers obtained with a Ziegler catalyst, especially a titanium-containing catalyst.

However, ethylenic polymers obtained using a titanium-containing catalyst, especially linear low-density ethylenic copolymers generally have a broad molecular weight distribution or composition distribution. It is therefore desired to further reduce components which cause stickiness of molded articles such as films, and components such as low molecular weight components which bleed out and adhere in fine dots to the film surface.

Further, ethylenic polymers obtained with a chromium-containing catalyst have a relatively high melt tension but are desired to have higher heat stability.

On the one hand, linear low density polyethylene produced by gas-phase polymerization using a metallocene catalyst has a narrow molecular weight distribution, and films thereof do not cause blocking as known in the art. In particular, a linear low-density ethylene-1-hexene copolymer produced with a metallocene catalyst gives films having excellent properties such as mechanical strength, transparency and heat sealing properties.

However, the polymer has a low melt tension because of its narrow molecular weight distribution compared with that of Ziegler-catalyzed polymers, causing problems such as poor bubble stability in inflation molding and significant neck-in in extrusion molding (T-die molding). To cope with these problems, the performances of the polymer are compensated for by adding a high pressure low density polyethylene with a high melt tension.

Moreover, the molding of the above polymer entails high resin pressure and high resin temperature, and gel-like products and die buildup are frequently caused during long-term film production. To eliminate these problems, a die and an extruder should be dismantled and cleaned or an additive should be added to suppress the gel-like products and die buildup.

[Patent Document 1] Japanese Patent Application Laid-Open Publication No. S56-90810
[Patent Document 2] Japanese Patent Application Laid-Open Publication No. S60-106806

[DISCLOSURE OF THE INVENTION]

[PROBLEMS TO BE SOLVED BY THE INVENTION]

Therefore, there is desired the development of an ethylenic copolymer excellent in moldability and mechanical properties and a film or sheet composed of the ethylenic polymer.

Objects of the present invention are to provide an ethylenic polymer, specifically an ethylene-α-olefin copolymer which is excellent in transparency and moldability and which can form a molded article, especially a film or sheet, excellent in mechanical strength, and to provide a molded article, preferably a film or sheet, comprising the ethylenic polymer. (In the following explanation, the ethylene-α-olefin copolymer for a film or sheet of the present invention may be referred to as the "ethylene-α-olefin copolymer (E)" or simply as the "copolymer (E)".)

[MEANS FOR SOLVING THE PROBLEMS]

The present invention relates to an ethylene-α-olefin copolymer (E) for a film or sheet characterized in that it satisfies the following requirements [1] to [5] simultaneously.

[1] The density (d) is in the range of 890 to 980 kg/$m^3$.

[2] The intrinsic viscosity ([η]) measured at 135°C in decalin is in the range of 0.5 to 10 dl/g.

[3] The ratio of weight average molecular weight (Mw) to number average molecular weight (Mn) (Mw/Mn) measured by GPC is in the range of 2.0 to 50.

[4] In an elution temperature-elution amount curve given by cross fractionation chromatography (CFC), the difference between a temperature at which the integrated elution amount is 1% by mass and a temperature at which the integrated elution amount is 40% by mass is 12°C or less, wherein the total elution amount is 100% by mass.

[5] The amount of a component soluble in decane is 0.5% by mass or less.

Further, the present invention relates to the above-mentioned ethylene-α-olefin copolymer characterized in that the above-mentioned ethylene-α-olefin copolymer (E) is composed of 80 to 20% by mass of the below-mentioned ethylene-α-olefin copolymer (A) and 20 to 80% by mass of the below-mentioned ethylene-α-olefin copolymer (B).

Here, the ethylene-α-olefin copolymer (A) comprises ethylene and an α-olefin having 3 to 10 carbon atoms and satisfies the following requirements: the density ($d_A$) is 910 to 980 kg/$m^3$; the intrinsic viscosity ($[\eta]_A$) is 0.5 to 3.0 dl/g as measured at 135°C in decalin; and the ratio of weight average molecular weight (Mw) to number average molecular weight (Mn) (Mw/Mn) is 1.5 to 5.0 as measured by GPC.

The ethylene-α-olefin copolymer (B) comprises ethylene and an α-olefin having 3 to 10 carbon atoms and satisfies that the density ($d_B$) is 880 to 950 kg/$m^3$, the intrinsic viscosity ($[\eta]_B$) is 1.0 to 10.0 dl/g as measured at 135°C in decalin and the ratio of weight average molecular weight (Mw) to number average molecular weight (Mn) (Mw/Mn) is 1.5 to 5.0 as measured by GPC.

In addition, the intrinsic viscosity of the ethylene-α-olefin copolymer (A) and that of the ethylene-α-olefin copolymer (B) satisfy the following relational equation (Eq-1).

$$([\eta]_B)/([\eta]_A)>1 \quad \ldots \quad (Eq\text{-}1)$$

Further, the present invention relates to the above-mentioned ethylene-α-olefin copolymer characterized in that the above-mentioned ethylene-α-olefin copolymer (E) has a melt tension (MT) at 190°C of 20 mN or more.

Moreover, the present invention relates to a film or sheet obtained from the ethylene-α-olefin copolymer (E), which preferably has (1) a thickness of 10 to 500 μm and (2) a dart impact of 100 g or more in terms of a thickness of 40 μm.

Furthermore, the present invention relates to a wrapping bag, a sheet or a bag composed of the above-mentioned film or sheet.

In addition, the present invention relates to a laminate comprising at least one layer of the above-mentioned film or sheet, wherein the film or sheet preferably has a dart impact of 130 g or more in terms of a thickness of 40 μm.

[EFFECT OF THE INVENTION]

The ethylene-$\alpha$-olefin copolymer (E) of the present invention is excellent in transparency and moldability and can produce a molded article, especially a film or sheet, which is excellent in mechanical strength properties such as dart impact.

[BEST MODE FOR CARRYING OUT THE INVENTION]

Hereinafter, preferred embodiments of the ethylene-$\alpha$-olefin copolymers (E) of the present invention will be sequentially explained, followed by the description of a method for producing the ethylene-$\alpha$-olefin copolymers (E), films or sheets obtained from the ethylene-$\alpha$-olefin copolymers (E) and various measurement methods, and finally working examples. In the present invention, the term "copolymers" is defined to refer to polymers including homopolymers obtained from a single olefin.

Ethylene-$\alpha$-olefin Copolymer (E)

The ethylene-$\alpha$-olefin copolymer (E) of the present invention is an ethylene homopolymer or a copolymer of ethylene and an $\alpha$-olefin having 3 to 10 carbon atoms, for example, such as propylene, 1-butene, 1-pentene, 1-hexene, 4-methyl-1-pentene, 3-methyl-pentene, 1-heptene, 1-octene, 1-decene or the like, preferably propylene, 1-butene, 1-hexene, 4-methyl-1-pentene or 1-octene, and is preferably a copolymer containing 10% by mol or less of the $\alpha$-olefin, or a mixture (composition) of these polymers, wherein:

[1] the density (d) is in the range of 890 to 980 kg/m$^3$,
[2] the intrinsic viscosity ([$\eta$]) is in the range of 0.5 to 10 dl/g as measured at 135°C in decalin,
[3] the ratio of weight average molecular weight (Mw) to number average molecular weight (Mn) (Mw/Mn) is in the range of 2.0 to 50 as measured by GPC,
[4] in an elution temperature-elution amount curve given by cross fractionation chromatography (CFC), the difference between a temperature at which the integrated elution amount is 1% by mass and a temperature at which the integrated elution amount is 40% by mass is 12°C or less, wherein the total elution amount is 100% by mass, and
[5] the amount of a component soluble in decane is 0.5% by mass or less.

The ethylene-$\alpha$-olefin copolymer (E) of the present invention contains typically 10% by mol or less and preferably 0.2 to 10% by mol of constituent units derived from the $\alpha$-olefin.

The ethylene-$\alpha$-olefin copolymer (E) satisfying the above requirements [1] to [5] provides molded articles such as a film and the like which are excellent in moldability and mechanical strength properties such as dart impact strength and the like. Hereinafter, the requirements [1] to [5] are specifically explained.

Requirements [1] to [3]

The ethylene-$\alpha$-olefin copolymer (E) of the present invention has a density (d) in the range of 890 to 980 kg/m$^3$, preferably 900 to 975 kg/m$^3$, more preferably 929 to 975 kg/m$^3$ and further more preferably 929 to 945 kg/m$^3$.

The ethylene-$\alpha$-olefin copolymer (E) of the present invention has an intrinsic viscosity ([$\eta$]) in the range of 0.5 to 10.0 dl/g, preferably 0.5 to 8.0 dl/g, more preferably 0.5 to 7.0 dl/g, further more preferably 0.5 to 5.0 dl/g and especially preferably 1.0 to 4.0 dl/g, as measured at 135°C in decalin. An ethylene-$\alpha$-olefin copolymer (E1) having an intrinsic viscosity ([$\eta$]) in the range of 0.5 to 5 dl/g as measured at 135°C in decalin is especially suitable for a film or sheet.

The ethylene-$\alpha$-olefin copolymer (E) of the present invention has a ratio of weight average molecular weight (Mw) to number average molecular weight (Mn) (Mw/Mn) in the range of 2.0 to 50, preferably 2.5 to 30 and more preferably 3.0 to 25, as measured by GPC.

The ethylene-$\alpha$-olefin copolymer having a density, an intrinsic viscosity and a molecular weight distribution in the above ranges is excellent in balance between mechanical properties and moldability. These parameters may be controlled to the above physical properties range by, for example, adjusting the feed ratio of hydrogen, ethylene and $\alpha$-olefin into a polymerization reactor.

Requirements [4] and [5]

In an elution temperature-elution amount curve given by cross fractionation chromatography (CFC) of the ethylene-$\alpha$-olefin copolymer (E) of the present invention, the difference between a temperature at which the integrated elution amount is 1% by mass and a temperature at which the integrated elution amount is 40% by mass is 12°C or less

and preferably 10°C or less, wherein the total elution amount is 100% by mass.

With the ethylene-α-olefin copolymer (E) of the present invention, the amount of a component soluble in decane is 0.5% by mass or less.

The ethylene-α-olefin copolymer (E) satisfying these requirements has a small amount of a high molecular component in whichα-olefins are copolymerized, or does not contain components having a relatively low molecular weight and a short branched chain. In this case, the polymer is excellent in balance between moldability and mechanical strength.

A preferred embodiment of the ethylene-α-olefin copolymer (E) of the present invention is characterized in that the copolymer satisfies the above requirements [1] to [5] and has a melt tension (MT) at 190°C of 20 mN or more, preferably 30 mN or more and more preferably 35 mN or more.

In a preferred embodiment of the ethylene-α-olefin copolymer (E) of the present invention, the ethylene-α-olefin copolymer (E) comprises 80 to 20% by mass and preferably 70 to 30% by mass of an ethylene-α-olefin copolymer (A) and 20 to 80% by mass and preferably 30 to 70% by mass of an ethylene-α-olefin copolymer (B). The ethylene-α-olefin copolymer (E) of such preferred embodiment is excellent in moldability and melt tension, and the obtainable molded article is excellent in transparency and mechanical strength.

The above-mentioned ethylene-α-olefin copolymer (A) comprises ethylene and an α-olefin having 3 to 10 carbon atoms and has a density ($d_A$) in the range of 910 to 980 kg/$m^3$, preferably 915 to 975 kg/$m^3$ and more preferably 920 to 975 kg/$m^3$, an intrinsic viscosity ($[\eta]_A$) in the range of 0.5 to 3.0 dl/g, preferably 0.5 to 2.7 dl/g and more preferably 0.7 to 2.5 dl/g as measured at 135°C in decalin, and a ratio of weight average molecular weight (Mw) to number average molecular weight (Mn) (Mw/Mn) in the range of 1.5 to 5.0, preferably 1.5 to 4.5 and more preferably 2.0 to 4.0 as measured by GPC.

The above-mentioned ethylene-α-olefin copolymer (B) comprises ethylene and an α-olefin having 3 to 10 carbon atoms and has a density ($d_B$) in the range of 880 to 950 kg/$m^3$, preferably 890 to 945 kg/$m^3$ and more preferably 895 to 940 kg/$m^3$, an intrinsic viscosity ($[\eta]_B$) in the range of 1.0 to 10.0 dl/g, preferably 1.0 to 8.0 dl/g and more preferably 1.0 to 7.0 dl/g as measured at 135°C in decalin, and a ratio of weight average molecular weight (Mw) to number average molecular weight (Mn) (Mw/Mn) in the range of 1.5 to 5.0, preferably 1.5 to 4.5 and more preferably 2.0 to 4.0 as measured by GPC.

In addition, the intrinsic viscosities of the ethylene-α-olefin copolymer (A) and the ethylene-α-olefin copolymer (B) satisfy the following relationship.

The ratio $([\eta]_B)/([\eta]_A)$ is more than 1, preferably more than 1 and less than 6.0, more preferably 1.1 or more and less than 6.0 and further more preferably 1.2 or more and less than 6.0.

When the ethylene-α-olefin copolymer (E) of the present invention comprises the copolymer (A) and the copolymer (B) as mentioned above, the copolymer exhibits excellent film moldability and film transparency. However, even when the copolymer comprises a single copolymer, the copolymer falls within the scope of the claims of the present invention as long as the copolymer satisfies the above requirements [1] to [5]. The ethylene-α-olefin copolymer (E) constituted of a single copolymer [hereinafter also referred to as the copolymer (E')] causes little gel-like products and die buildup during film production and forms a film with little fine dots bleeding out on the film surface.

The copolymer (E') belongs to the ethylene-α-olefin copolymers (E) satisfying the above-mentioned requirements [1] to [5] and satisfies the following requirements [1'] to [5'].

The copolymer (E') is characterized in that

[1'] the density (d) is in the range of 910 to 980 kg/$m^3$, preferably 920 to 975 kg/$m^3$ and more preferably 925 to 970 kg/$m^3$,

[2'] the intrinsic viscosity ([η]) is in the range of 0.5 to 4.0 dl/g, preferably 0.5 to 3.5 dl/g and more preferably 0.5 to 3.0 dl/g as measured at 135°C in decalin,

[3'] the ratio of weight average molecular weight (Mw) to number average molecular weight (Mn) (Mw/Mn) is in the range of 1.5 to 5.0, preferably 1.5 to 4.5 and more preferably 2.0 to 4.0 as measured by GPC,

[4'] in an elution temperature-elution amount curve given by cross fractionation chromatography (CFC), the difference between a temperature at which the integrated elution amount is 5% by mass and a temperature at which the integrated elution amount is 50% by mass is 10°C or less and preferably 9°C or less, wherein the total elution amount is 100% by mass, and

[5'] the melt tension (MT) measured at 190°C is 5 mN or more, preferably 5 to 50 mN and more preferably 5 to 30 mN.

The copolymer (E') also satisfying the above requirements [1'] to [5'] causes little gel-like products and die buildup during film production and forms a film with little fine dots bleeding out on the film surface. Specifically, a film obtained from the copolymer (E') satisfies the following properties [a] to [c].

[a] The total haze of a film having a thickness of 40 μm is 35% or less, preferably 30% or less and more preferably 25% or less.

[b] The film impact strength measured at 23°C is 5 kJ/m or more.

[c] The visual evaluation value of the contamination at a guide roll when a film is formed is score 3 or higher, preferably score 4 or higher and more preferably score 5 by 5-grade evaluation.

When a film is prepared by the cast film-forming (details are explained in Examples) of an ethylene polymer, in general, a molten resin at 170 to 250°C extruded from a T-die is brought into contact with a chill roll at 20 to 100°C to solidify into a film. At that time, a powder may adhere to the surface of the film or guide rolls. In the present invention, the contamination was visually evaluated as follows: a black felt cloth was placed between a guide roll and the film and a powder which adhered to the felt cloth was observed after a fixed period of time.

Further, the adhesion amount of the powder was evaluated as follows: a black felt cloth was pressure bonded under a fixed tension to a guide roll at the downstream of the chill roll and the white powder was allowed to adhere to the felt cloth by using the friction generated when the cast film passed through between a roll and the felt cloth. The film was brought into contact with the felt cloth while the film was drawn 500 m and then the black felt cloth was removed. The adhesion amount was visually evaluated in five grades according the adhesion amount of the white powder.

Score 5: No white powder adhered.
Score 4: A small amount of white powder adhered.
Score 3: The white powder adhered on about half of the area.
Score 2: Between score 3 and score 1
Score 1: The white powder adhered on almost the whole area.

Here, the result of Comparative Example 7 was used as the criterion of score 1.

The ethylene-α-olefin copolymer (E) of the present invention may contain additives such as weathering stabilizers, heat-stabilizers, anti-static agents, workability improvers, anti-slip agents, anti-blocking agents, anti-fogging agents, lubricants, dyes, nucleating agents, plasticizers, anti-aging agents, hydrochloric acid absorbers, antioxidants and the like; pigments such as carbon black, titanium oxide, titanium yellow, phthalocyanine, isoindolinone, quinacridone compound, condensed azo compound, ultramarine blue, cobalt blue and the like; and additional polymers, if needed, as long as the object of the present invention is not impaired.

The above-mentioned antioxidants specifically include, for example, phenol anti-oxidants such as 2,6-di-t-butyl-p-cresol (BHT), tetrakis[methylene-3-(3,5-di-t-butyl-4-hydroxyphenyl) propionate]methane (trade name: IRGANOX 1010, manufactured by Ciba Specialty Chemicals), n-octadecyl-3-(4'-hydroxy-3,5'-di-t-butylphenyl)propion ate (trade name: IRGANOX 1076, produced by Ciba Specialty Chemicals) and the like; phosphite anti-oxidants such as bis(2,4-di-t-butylphenyl)pentaerythritol diphosphite, tris(2,4-di-t-butylphenyl)phosphite, 2,4,8,10-tetra-t-butyl-6-[3-(3-methyl-4-hydroxy-5-t-but ylphenyl)propoxy]dibenzo[d,f][1,3,2]dioxaphosphepine (trade name: Sumilizer GP, manufactured by Sumitomo Chemical Co., Ltd.) and the like.

The above-mentioned lubricants specifically include, for example, a higher fatty acid amide, a higher fatty acid ester and the like. The anti-static agents specifically include, for example, a glycerin ester of a fatty acid having 8 to 22 carbon atoms, a sorbitan acid ester, a polyethyleneglycol ester and the like. The workability improvers specifically include, for example, a fatty acid metal salts such as calcium stearate and the like, a fluorine-based resin and the like. The anti-blocking agents includes an inorganic anti-blocking agent and an organic anti-blocking agent. The inorganic anti-blocking agents specifically include, for example, silica, calcium carbonate, talc and the like, and the organic anti-blocking agents specifically include, for example, a powder of a crosslinked methyl polymethacrylate, crosslinked poly(methyl methacrylate-styrene)copolymer, crosslinked silicone and crosslinked polystyrene, and the like.

These additives including the antioxidant are arbitrarily added in amounts of 0.01 to 30 parts by mass depending on the kinds of the additives, based on 100 parts by mass of the ethylene-α-olefin copolymer (E).

The additional polymers include polyolefin-based resins other than the ethylene-α-olefin copolymer (E) used in the present invention, and specific examples include a high-pressure low-density polyethylene and a linear low-density polyethylene (LLDPE) for improving moldability, transparency and the like, and an ethylene-based resin for improving flowability, strength, heat sealing properties and the like. These additional polymers may be typically added in an amount

of 1 to 30 parts by mass based on 100 parts by mass of the ethylene-α-olefin copolymer (E).

Methods for mixing the additional resins and additives added as required include, for example, a method in which the ethylene-α-olefin copolymer (E) of the present invention, and the additional resins and additives are melt-kneaded using various kinds of mixers such as a single-screw extruder, a twin-screw extruder, a Bunbary mixer, a heating roller and the like, and then the mixture is shaped into a film; a method in which the ethylene-α-olefin copolymer (E) of the present invention, and the additional resins and additives are dry blended using various kinds of mixers such as a Henschel mixer, a tumbler mixer and the like, and then the blend is shaped into a film; and a method in which at least one master batch is prepared from the additional resins and additives, and then the master batch and the ethylene-α-olefin copolymer (E) of the present invention are dry blended using various kinds of mixers such as a Henschel mixer, a tumbler mixer and the like, and then the blend is shaped into a film.

The ethylene-α-olefin copolymer (E) of the present invention may be shaped into films by inflation molding, cast molding, extrusion lamination molding and the like, containers by extrusion molding, hollow articles such as bottles and the like, pipes or profiles, foamed articles by foam molding, molded articles by injection molding, molded articles by rotational molding, molded articles by calender molding and molded articles by roll molding. In addition, the ethylene-α-olefin copolymer (E) of the present invention may be used for fibers, monofilaments, nonwoven fabrics and the like. These articles include articles containing a part composed of the ethylene-α-olefin copolymer (E) and a part composed of other resins (laminates and the like). In addition, the ethylene-α-olefin copolymer (E) of the present invention may be crosslinked during the molding process.

Especially, the ethylene-α-olefin copolymer (E) of the present invention can provide films excellent in properties by inflation molding, cast molding, extrusion lamination molding and the like.

Part of the ethylene-α-olefin copolymer (E) as mentioned above may be graft modified by a polar monomer. The polar monomers include hydroxyl group-containing ethylenic unsaturated compounds, amino group-containing ethylenic unsaturated compounds, epoxy group-containing ethylenic unsaturated compounds, aromatic vinyl compounds, unsaturated carboxylic acid compounds or derivatives thereof, vinyl ester compounds, vinyl chloride, vinyl group-containing organic silicon compounds and the like.

The modified ethylene-α-olefin copolymer may be obtained by graft polymerizing the polar monomer onto the ethylene-α-olefin copolymer (E). In graft polymerizing the polar monomer as mentioned above onto the ethylene-α-olefin copolymer (E), the monomer is typically used in an amount of 1 to 100 parts by mass and preferably 5 to 80 parts by mass, based on 100 parts by mass of the ethylene-α-olefin copolymer (E). This graft polymerization is typically carried out in the presence of a radical initiator.

As the radical initiator, an organic peroxide, an azo compound and the like may be used. The radical initiator may be directly mixed with the ethylenic polymer and the polar monomer, or may be used afterdissolved in a small amount of organic solvent. The organic solvent may be used without any particular limitations as long as it can dissolve the radical initiator.

In addition, in graft polymerizing the polar monomer onto the ethylene-α-olefin copolymer (E), a reducing substance may be used. The use of the reducing substance may increase the grafting amount of the polar monomer.

The graft modification of the ethylene-α-olefin copolymer (E) with the polar monomer may be carried out by a conventionally known method. For example, the ethylene-α-olefin copolymer (E) is dissolved in an organic solvent and the polar monomer and the radical initiator are added to the solution, and then the mixture is reacted at 70 to 200°C, preferably at 80 to 190°C for 0.5 to 15 hours, preferably 1 to 10 hours to give the modified polymer.

Alternatively, the modified ethylene-α-olefin copolymer may be produced by reacting the ethylene-α-olefin copolymer (E) and the polar monomer without a solvent using an extruder or the like. This reaction is preferably carried out at or above the melting point of the ethylene-α-olefin copolymer (E), specifically at 120 to 250°C typically for 0.5 to 10 minutes.

The modification amount (grafting amount of the polar monomer) of the modified ethylene-α-olefin copolymer thus obtained is typically 0.1 to 50% by mass, preferably 0.2 to 30% by mass and more preferably 0.2 to 10% by mass.

When the above modified ethylene-α-olefin copolymer contains the ethylene-α-olefin copolymer (E) of the present invention, the adhesiveness and compatibility with other resins are excellent, and the wettability of the surface of the molded article obtained from the ethylene-α-olefin copolymer (E) may be improved.

Further, when the modified ethylene-α-olefin copolymer of the present invention is crosslinked, the polymer may be suitably used for a crosslinked electric wire and a crosslinked pipe.

Method for Producing Ethylene-α-Olefin Copolymer (E)

The ethylene-α-olefin copolymer (E) of the present invention may be obtained, for example, by copolymerizing ethylene with an α-olefin having 3 to 10 carbon atoms in the presence of a catalyst for olefin polymerization formed from

(A) a transition metal compound in which a cyclopentadienyl group and a fluorenyl group are bonded by covalent

binding crosslinking containing a Group 14 atom;
(B) at least one compound selected from

(B-1) an organometallic compound,
(B-2) an organoaluminum oxy compound and
(B-3) a compound which reacts with the transition metal compound to form an ion pair; and

(C) a carrier.

(A) Transition Metal Compound

The transition metal compound (A) is a compound represented by the general formulae (1) and (2) described below.
[Chemical Formula 1]

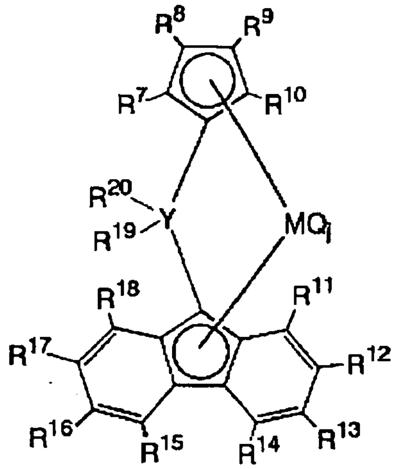

··· (1)

[Chemical Formula 2]

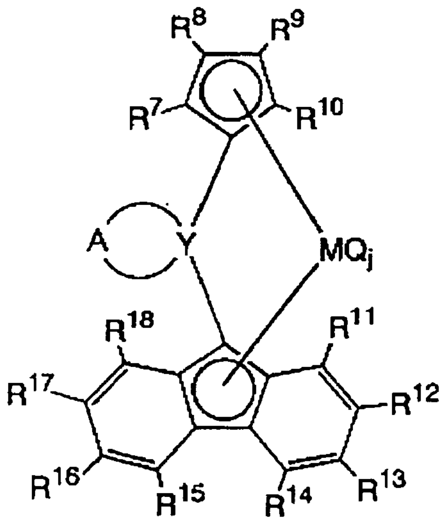

··· (2)

[In the above general formulae (1) and (2), $R^7$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$ and $R^{20}$ are selected from a hydrogen atom, a hydrocarbon group and a silicon-containing hydrocarbon group and may be the same or different, two adjacent substituents from $R^7$ to $R^{18}$ may be bonded together to form a ring, A is a divalent hydrocarbon group having 2 to 20 carbon atoms which may contain a partially unsaturated bond and/or aromatic ring and forms a ring structure together with Y, A may contain two or more ring structures including the ring that it forms together with Y, Y is carbon or silicon, M is a metal selected from Group 4 in the Periodic Table, Q may be the same or different form each other and is selected from a halogen, a hydrocarbon group, an anionic ligand and a neutral ligand with a lone electron pair capable of coordinating, and j is an integer from 1 to 4.]

In the present invention, among the above-mentioned transition metal compounds, a compound in which $R^7$ to $R^{10}$ are each a hydrogen atom, Y is a carbon atom, M is Zr and j is 2, is preferably used.

The transition metal compound (A) used in Examples described later is specifically represented by the following general formula (3), but in the present invention, it is not at all limited to this transition metal compound.

[Chemical Formula 3]

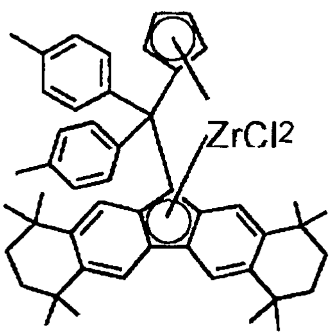

···(3)

the structure of the transition metal compound represented by the above formula (3) was determined by using 270 MHz 1H-NMR (GSH-270, manufactured by JEOL Ltd.) and FD-Mass Spectrometer (SX-102A, manufactured by JEOL Ltd.).

(B-1) Organometallic Compound

The organometallic compounds (B-1) used as necessary in the present invention include, specifically an organic aluminum compound as described below.

General Formula $R^a_mAl(OR^b)_nH_pX_q$

(In the formula, $R^a$ and $R^b$ may be the same or different from each other and represent a hydrocarbon group having 1 to 15 carbon atoms, preferably 1 to 4 carbon atoms, X represents a halogen atom, m is a number of $0<m\leq3$, n is a number of $0\leq n<3$, p is a number of $0\leq p<3$, q is a number of $0\leq q<3$, and $m+n+p+q=3$.)
The aluminum compound used in Examples described later is triisobutylaluminum or triethylaluminum.

(B-2) Organoaluminum Oxy Compound

The organoaluminum oxy compound (B-2) used as necessary in the present invention may be a conventionally well-known aluminoxane, or may be an organoaluminum oxy compound insoluble in benzene as illustrated in Japanese Patent Application Laid-Open Publication No. H02-78687.

The organoaluminum oxy compound used in Examples described later is a commercially available MAO (methylalumoxane)-toluene solution manufactured by Nippon Aluminum Alkyls, Ltd.

(B-3) Compound Which Reacts with Transition Metal Compound to Form Ion Pair

The compound (B-3) which reacts with the above-mentioned transition metal compound (A) to form an ion pair is referred to as the "ionized ionic compound" hereinafter. The compounds include Lewis acids, ionic compounds, borane compounds, carborane compounds and the like, which are described in Japanese Patent Application Laid-Open Publication No. H01-501950, Japanese Patent Application Laid-Open Publication No. H01-502036, Japanese Patent Application Laid-Open Publication No. H03-179005, Japanese Patent Application Laid-Open Publication No. H03-179006, Japanese Patent Application Laid-Open Publication No. H03-207703, Japanese Patent Application Laid-Open Publication No. H03-207704, US Patent Publication No. 5321106 and the like. In addition, the compounds (B-3) also include heteropoly compounds and isopoly compounds. Such ionized ionic compounds (B-3) may be used singly or in combination of two or more kinds. Further, as the component (B) used in Examples described later, the above mentioned (B-1) and (B-2) were used.

(C) Fine Particulate Carrier

The fine particulate carrier (C) used as necessary in the present invention is an inorganic or organic compound and is a granular or fine particulate solid. Among these, as the inorganic compound, a porous oxide, an inorganic halide, clay, a clay mineral or an ion exchangeable layered compound is preferred. Such porous oxides vary in their properties depending on the types and production methods and the carrier used in the present invention desirably preferably has a particle size of 1 to 300 μm and preferably 3 to 200 μm, a specific surface area of 50 to 1000 $m^2/g$ and preferably 100 to 800 $m^2/g$ and a fine pore volume of 0.3 to 3.0 $cm^3/g$. Such carriers are used after sintering at 80 to 1000°C and preferably at 100 to 800°C as necessary. In addition, the carrier used in Examples described later, unless otherwise specified, is $SiO_2$ having an average particle size of 12 μm, a specific surface area of 800 $m^2/g$ and a fine pore volume of 1.0 $cm^3/g$, manufactured by Asahi Glass Co., Ltd.

The catalyst for olefin polymerization related to the present invention may contain the transition metal compound (A), at least one kind of compound (B) selected from, the organometallic compound (B-1), the organoaluminum oxy compound (B-2) and the ionized ionic compound (B-3), the fine particulate carrier (C) as necessary and a specific organic compound component (D) as described later as necessary.

(D) Organic Compound Component

In the present invention, the organic compound component (D) is used as necessary for the purpose of improving polymerization performance and the physical properties of the obtainable polymer. Such organic compounds include alcohols, a phenolic compound, a carboxylic acid, a phosphorus compound, a sulfonic acid salt and the like, but are not limited to these compounds.

Polymerization Method

The ethylene-α-olefin copolymer (E) of the present invention may be obtained by copolymerizing ethylene with an α-olefin having 3 to 10 carbon atoms in the presence of the catalyst for olefin polymerization as described above.
In performing the polymerization, the use and addition order of the components are arbitrarily selected and the following embodiments (P1) to (P10) are mentioned as examples.
(P1): The component (A) and at least one component (B) (hereinafter, simply referred to as the "component (B)") selected from the organometallic compound (B-1), the organoaluminum oxy compound (B-2) and the ionized ionic compound (B-3) are added into a polymerization reactor in an arbitrary order.
(P2) : A catalyst in which the component (A) is brought into contact with the component (B) in advance is added into a polymerization reactor.
(P3): A catalyst component in which the component (A) is brought into contact with the component (B) in advance and the component (B) are added into a polymerization reactor in an arbitrary order. In this case, the components (B) may be the same or different.
(P4): A catalyst component in which the component (A) is supported on the fine particulate carrier (C) and the component (B) are added into a polymerization reactor in an arbitrary order.
(P5): A catalyst in which the component (A) and the component (B) are supported on the fine particulate carrier (C) is added into a polymerization reactor.
(P6): A catalyst component in which the component (A) and component (B) are supported on the fine particulate carrier (C), and the component (B) is added into a polymerization reactor in an arbitrary order. In this case, the components (B) may be the same or different.
(P7) : A catalyst component in which the component (B) is supported on the fine particulate carrier (C), and the component (A) are added into a polymerization reactor in an arbitrary order.
(P8) : A catalyst component in which the component (B) is supported on the fine particulate carrier (C), the component (A) and the component (B) are added into a polymerization reactor in an arbitrary order. In this case, the components (B) may be the same or different.
(P9): A catalyst in which the component (A) and the component (B) are supported on the fine particulate carrier (C) is brought into contact with the component (B) in advance, and the resultant catalyst component is added into a polymerization reactor. In this case, the components (B) may be the same or different.
(P10): A catalyst in which the component (A) and the component (B) are supported on the fine particulate carrier (C) is brought into contact with the component (B) in advance. The resultant catalyst component and the component (B) are added into a polymerization reactor in an arbitrary order. In this case, the components (B) may be the same or different.
In the above embodiments (P1) to (P10), at least two catalyst components may be brought into contact in advance.
An olefin may be prepolymerized on a solid catalyst component in which the component (A) and the component (B) are supported on the fine particulate carrier (C). The prepolymerized solid catalyst component contains the prepolymerized polyolefin in a ratio of typically 0.1 to 1000 g, preferably 0.3 to 500 g and especially preferably 1 to 200 g, per 1 g of the solid catalyst component.
In addition, for the purpose of allowing the polymerization to proceed smoothly, additives such as an antistatic agent and an antifouling agent and the like may be supported on the catalyst for olefin polymerization and may also be directly provided into a polymerization reactor. The additives are not particularly limited and include, for example, a polyalkylene oxide such as polyethylene glycol, polypropylene glycol and the like, a polyalkylene oxide block copolymer in which two or more kinds of polyalkylene oxides are bonded, a polyalkylene oxide alkyl ether, an alkyldiethanolamine, N,N-bis(2-hydroxyethyl)alkyl amine and the like. The molecular terminal of these compounds may be alkylated.
The polymerization may be carried out by any of a solution polymerization method, a suspension polymerization method and a gas-phase polymerization method.
Inert hydrocarbon mediums used in the liquid-phase polymerization method include specifically aliphatic hydrocarbons such as propane, butane, pentane, hexane, heptane, octane, decane, dodecane, kerosene and the like; alicyclic hydrocarbons such as cyclopentane, cyclohexane, methylcyclopentane and the like; aromatic hydrocarbons such as benzene, toluene, xylene and the like; halogenated hydrocarbons such as ethylene chloride, chlorobenzene, dichloromethane and the like; and mixtures thereof. Further, the olefin itself may be used as a solvent.
In performing the (co)polymerization by using the catalyst for olefin polymerization as mentioned above, the component (A) is used in an amount of typically $10^{-12}$ to $10^{-2}$ mol and preferably $10^{-10}$ to $10^{-3}$ mol, per one liter of the reaction volume.
The component (B-1) used as necessary is used in such an amount that the molar ratio of the component (B-1) to the transition metal atom (M) in the component (A), that is, [(B-1)/M], is typically 0.01 to 100,000 and preferably 0.05 to 50,000.

The component (B-2) used as necessary is used in such an amount that the molar ratio of the aluminum atom in the component (B-2) to the transition metal atom (M) in the component (A) that is, [(B-2)/M], is typically 10 to 500,000 and preferably 20 to 100,000.

The component (B-3) used as necessary is used in an amount so that the molar ratio of the component (B-3) to the transition metal atom (M) in the component (A), that is, [(B-3)/M], is typically 1 to 10 and preferably 1 to 5.

The component (D) which is used as necessary is used in such an amount that the molar ratio [(D)/(B-1)] is typically 0.01 to 10 and preferably 0.1 to 5 when the component (B) is the component (B-1), the molar ratio [(D)/(B-2)] is typically 0.001 to 2 and preferably 0.005 to 1 when the component (B) is the component (B-2), and the molar ratio [(D)/(B-3)] is typically 0.01 to 10 and preferably 0.1 to 5 when the component (B) is the component (B-3).

Further, the polymerization temperature in the use of such catalyst for olefin polymerization is in the range of typically -50 to +250°C, preferably 0 to 200°C and especially preferably 60 to 170°C. The polymerization pressure is typically from normal pressure to 100 $kg/cm^2$ and preferably from normal pressure to 50 $kg/cm^2$, and the polymerization reaction may be carried out in any of a batch (batch-wise) system, a semicontinuous system and a continuous system. The polymerization is carried out typically in a gas phase or in a slurry phase in which polymer particles are precipitated out in a solvent. Further, the polymerization is carried out in two or more separate stages that have different reaction conditions. In the case of slurry polymerization or gas phase polymerization, the polymerization temperature is preferably from 60 to 90°C and more preferably from 65 to 85°C. When the polymerization is carried out within this temperature range, an ethylene-α-olefin copolymer having a narrower composition distribution may be obtained. The obtainable polymer is in the form of particles whose diameters are about tens to thousands of micrometers.

Since the above olefin polymerization catalyst has extremely high polymerization performance also for the α-olefin (for example, 1-hexene) which is copolymerized with ethylene, a procedure is required so that a copolymer having an excessively high content of the α-olefin will not be produced during the predetermined polymerization. For example, the following procedures are carried out immediately or as soon as possible after the contents in the polymerization reactor are withdrawn. [1] The polymer is separated from the solvent and unreacted α-olefin with a solvent separator. [2] An inert gas such as nitrogen is added to the contents and the solvent and unreacted α-olefin are forcibly discharged from the system. [3] A pressure is applied to the contents and the solvent and unreacted α-olefin are forcibly discharged from the system. [4] A large amount of solvent is added to the contents and the concentration of unreacted α-olefin is diluted to a concentration at which polymerization will not substantially occur. [5] Substances such as methanol and the like which deactivate the polymerization catalyst are added to the contents. [6] The contents are cooled to a temperature at which polymerization will not substantially occur. These methods may be carried out singly or in combination.

The molecular weight of the ethylene-α-olefin copolymer (E) may be adjusted by allowing hydrogen to exist in the polymerization system or by changing the polymerization temperature. In addition, it may be adjusted by appropriately selecting the component (B).

When the ethylene-α-olefin copolymer (E) is produced in two stages for example, the ethylene-α-olefin copolymer (A) may be produced in the first stage and the ethylene-α-olefin copolymer (B) having a higher intrinsic viscosity may be produced in the second stage. The order may be reversed. The polymerization conditions such as the types and amounts of comonomers, polymerization temperature, hydrogen concentration and the like in the first and second stages may be different from each other.

The polymer particles obtained by polymerization reaction may be pelletized by the following methods:

(1) The particles of ethylene-α-olefin copolymer (E) and additional components as desired are mechanically blended using an extruder, a kneader or the like and then the blend is cut into a predetermined size.

(2) The ethylene-α-olefin copolymer (E) and additional components as desired are dissolved in an appropriate good solvent (for example, hydrocarbon solvents such as hexane, heptane, decane, cycolhexane, benzene, toluene, xylene and the like), subsequently the solvent is removed, the residue is mechanically blended using an extruder, a kneader or the like, and then the blend is cut into a predetermined size.

<u>Molded Article</u>

A molded article of the present invention is obtained from the ethylene-α-olefin copolymer (E). The molded article of the present invention is generally any kind of molded articles obtained by molding a polyolefin such as polyethylene and the like, and the molded articles specifically include, for example, molded articles such as containers obtained by extrusion molding, hollow articles such as bottles and the like, pipes and profiles, foamed articles by foam molding, molded articles by injection molding, and thermoformed articles obtained by vacuum thermoforming, air pressure

thermoforming and the like.

Film or Sheet

A film or sheet of the present invention is obtained from the above-mentioned ethylene-α-olefin copolymer (E).
The film or sheet of the present invention is preferably characterized by:

(1) having a thickness in the range of 10 to 500 μm, more preferably 10 to 300 μm and even more preferably 15 to 200 μm; and
(2) having a dart impact of 100 g or more in terms of a thickness of 40 μm, and preferably having a dart impact of 130 g or more and more preferably 160 g or more with a thickness of 40 μm.

Moreover, the film or sheet obtained from the ethylene-α-olefin copolymer (E) of the present invention or the ethylene-α-olefin copolymer (E1) typically has an internal haze of 30% or less and preferably 25% or less.
The films or sheets of the present invention specifically include, for example, a heavy-duty packaging film, a compression packaging film, a plastic shopping bag, a standardized bag, a laminate film, a retort film, a food film, a protect film (including a process paper for electronic components and building materials), a film for packaging electronic components, a shrinkable film (including a label), a medical film (including an infusion solution bag), a packaging material for industrial chemicals, a bag-in-box, an agricultural film (greenhouse film, rain-proof film, multi-film), industrial materials (including a liner sheet), a γ-ray film, and a film corresponding to the ministerial ordinance for milk and the like. Above all, an especially suitable application is an additive-free packaging film which includes no additives such as a heat stabilizer, a hydrochloric acid absorber, an anti-blocking agent, a lubricant, an anti-static agent, a weathering stabilizer and the like.
The film of the present invention may be produced by various conventionally well-known production methods. Such production methods (in which the film is formed in a step preceding elongation) specifically include, for example, a single- or multi-layer inflation film molding method, a single- or multi-layer T-die cast film molding method, an extrusion laminate molding method (including a tandem method and a Nielam method), a calender molding method, a press molding method, and the like. Since the ethylene-α-olefin copolymer (E) of the present invention has a high melt tension and the molten film is easily stabilized at the time of inflation molding, inflation molding is more preferable. Since the copolymer has a relatively high melt tension, the occurrence of die buildup that causes streaks in the obtainable film and reduces the thickness accuracy is suppressed in the extrusion in inflation molding, cast molding and the like. The copolymer provides another advantage that the frequency of cleaning around the die slip is reduced.
The packaging film or sheet using the film of the present invention typically has a thickness of 10 to 500 μm, preferably 10 to 300 μm and more preferably 15 to 200 μm.
In addition, the film or sheet of the present invention may be laminated on a base material to give a composite film. The base materials include well-known materials, and for example, cellophane, paper, paperboard, fabric, aluminum foil, polyamide resins such as Nylon 6, Nylon 66 and the like, polyester resins such as polyethyleneterephthalate, polybutyleneterephthalate and the like, and stretched polypropylene. Exemplary adhesive layers include, for example, adhesives and pressure-sensitive adhesives such as an acrylic adhesive, a butyl rubber, and a urethane adhesive.
The methods for laminating the film obtained from the ethylene-α-olefin copolymer (E) of the present invention on the base material include known methods, and for example, a dry lamination method, a wet lamination method, a sand lamination method, a hot melt lamination method and the like.
In addition, the film or sheet of the present invention may be used for a laminate having at least one layer comprising the film or sheet. The constitution of the laminate is not particularly limited, but a propylene-based resin, a cyclic polyolefin-based resin, a styrene-based resin, polyamide, polyester, polycarbonate, an ethylene-based resin (EVA, ionomer), a vinyl alcohol-based resin, a vinyl chloride resin and the like are used taking into account the desired performance. For example, in order for the laminate to have barrier properties, a resin that imparts barrier properties such as polyvinyl alcohol, EVOH, Nylon-6, Nylon-66, Nylon-11, Nylon-6/11, Nylon-610, cyclic polyolefin, polyethyleneterephthalate, polybutyleneterephthalate and the like are used, and the performance is obtained by laminating the ethylene-α-olefin copolymer (E) of the present invention and the above resin. In this case, the interlaminar adhesiveness is improved by using the modified ethylene-α-olefin copolymer as an intermediate layer between the ethylene-α-olefin copolymer (E) and the resin that imparts barrier properties. The laminating method is not particularly limited, but a multilayer inflation film molding and a multilayer T-die cast film coextrusion are preferred.
Hereinafter, the present invention will be explained more specifically based on Examples, but the present invention is not limited by these Examples.

[EXAMPLES]

The sample preparation methods and measurement methods for various physical properties adopted in Examples are described below.

Preparation of Samples for Measurement

To 100 parts by mass of the particulate ethylene-α-olefin copolymer (E), were blended 0.20 part by mass of tri(2,4-di-t-butylphenyl)phosphate as a second antioxidant, 0.20 part by mass of n-octadecyl-3-(4'-hydroxy-3',5'-di-t-butylphenyl)propio nate as a heat stabilizer and 0.15 part by mass of calcium stearate as a hydrochloric acid absorber.. Then, to prepare a sample for measurement, the resulting mixture was pelletized at a temperature of 200°C and at a resin extrusion rate of 25 kg/h using a single-screw extruder (screw diameter, 65 mm, L/D=28, screenmesh, #40/#60/#300x4/#60/#40) manufactured by Placo Co., Ltd.

Measurement of Ethylene Content and α-Olefin Content

The number of methyl branches per 1000 carbon atoms in the molecular chain of the ethylene polymer was determined by $^{13}$C-NMR. The measurement was made using a Lambda 500 Type nuclear magnetic resonance unit (1H: 500 MHz) manufactured by JEOL Ltd., with a number of scans of 10,000 to 30, 000. The main chain methylene peak (29.97 ppm) was used as the chemical shift standard. To a commercially available quartz glass tube for NMR measurement with a diameter of 10 mm, were placed 250 to 400 mg of the sample and 2 ml of a mixed solution of o-dichlorobenzene (guaranteed reagent, produced by Wako Pure Chemical Industries, Ltd.) and benzene-$d_6$ (produced by ISOTEC Inc.) with a ratio of 5:1 (by volume ratio), and the mixture was heated at 120°C and dispersed uniformly. The resulting solution was subjected to NMR measurement.

The assignment of absorption peaks in the NMR spectrum was carried out based on "NMR - Sosetsu to Jikken Gaido [I] (NMR - General Remarks and Guidelines to Experimentation [I])", Kagaku no Ryoiki, extra edition No. 141, pages 132 to 133.

The composition of the ethylene-α-olefin copolymer was determined by measuring a $^{13}$C-NMR spectrum of the sample where 250 to 400 mg of the copolymer was uniformly dissolved in 2 ml of hexachlorobutadiene in a sample tube with a diameter of 10 mm, under the measurement conditions of a measurement temperature of 120°C, a measurement frequency of 125.7 MHz, a spectrum width of 250,000 Hz, a pulse repetition time of 4.4 seconds and 45° pulse.

Cross Fractionation Chromatography (CFC)

The CFC was performed as follows using a CFC T-150A Type manufactured by Mitsubishi Petrochemical Co., Ltd. Three Shodex AT-806MS columns were used as separation columns, the eluent was o-dichlorobenzene, the sample concentration was 0.1 to 0.3 wt/vol %, the injection volume was 0.5 ml and the flow rate was 1.0 ml/min. The sample was heated at 145°C for 2 hours and then cooled to 0°C at a rate of 10°C/h and further maintained at 0°C for 60 minutes and thereby precipitated on a carrier. The temperature rising elution column volume was 0.86 ml and the line volume was 0.06 ml. An infrared spectrometer MIRAN 1A CVF Type ($CaF_2$ cell) manufactured by FOXBORO was used as a detector and was set in the absorbance mode with a response time of 10 seconds. An infrared ray of 3.42 μm (2924 $cm^{-1}$) was detected. The elution temperatures ranging from 0°C to 145°C were divided into 35 to 55 fractions. In the vicinity of the elution peak, the temperatures were divided into factions in increments of 1°C. The temperature was indicated by integers only; for example, "a fraction eluted at 90°C" refers to components eluted at 89°C to 90°C. The molecular weights of the components which did not coat the carrier even at 0°C and the fractions eluted at individual temperatures were measured and were converted to molecular weights relative to PE using a standard calibration curve. The SEC temperature was 145°C, the injection volume of internal standard was 0.5 ml, the injection location was 3. 0 ml, and the data sampling interval was 0.50 second. When any pressure abnormality occurs due to excessive elution of components in a narrow temperature range, the sample concentration may be set to less than 0. 1 wt/vol %. The data processing was carried out with an analysis program "CFC Data Processing (version 1.50)" attached to the apparatus. Although it is said that the cross fraction chromatography (CFC) is an analytical method capable of reproducing the results with high precision when the measurement conditions are strictly the same, the measurement is preferably carried out several times and the results are averaged.

Weight Average Molecular Weight (Mw), Number Average Molecular Weight (Mn) and Molecular Weight Curve

The measurements were carried out as follows using GPC-150C manufactured by Waters Corporation. The separation columns were TSK gel GMH6-HT and TSK gel GMH6-HTL, the columns had an inner diameter of 7.5 mm

and a length of 600 mm, and the column temperature was set at 140°C. The mobile phase was o-dichlorobenzene (Wako Pure Chemicals Industries, Ltd.) containing 0.025% by mass of BHT (Takeda Pharmaceutical Co., Ltd.) as an antioxidant and was flowed at a rate of 1.0 ml/min. The sample concentration was 0.1% by mass, the sample injection volume was 500 μl and a differential refractometer was used as a detector. As standard polystyrenes, a product of Tosoh Corporation was used for a molecular weight of Mw<1,000 and Mw>4×10$^6$ and a product of Pressure Chemical Co. for a molecular weight of 1,000≤Mw≤4×10$^6$. The molecular weight was determined in terms of polyethylene by means of universal calibration.

Intrinsic Viscosity ([η])

This was a value measured at 135°C using decalin solvent. In detail, approximately 20 mg of the granulated pellets was dissolved in 15 ml of decalin and the specific viscosity $\eta_{sp}$ was measured in an oil bath at 135°C. The dacalin solution was diluted by adding 5 ml of the decalin solvent and then the specific viscosity $\eta_{sp}$ was measured in the same manner. The diluting operation was repeated twice further and the intrinsic viscosity was determined as $\eta_{sp}$/C which the concentration (C) is extraporated to 0 (see the following equation).

$$[\eta]=\lim (\eta_{sp}/C) \quad (C\to 0)$$

Density (d)

Sheets having a thickness of 0.5 mm were formed under a pressure of 100 kg/cm$^2$ using a hydraulic thermal press machine manufactured by SHINTO Metal Industries Corporation (Spacer-shape: a plate 240×240×0.5 mm having 9 holes of 45×45×0.5 mm) wherein the temperature was set at 190°C. The obtained sheets were compressed and cooled under a pressure of 100 kg/cm$^2$ using another hydraulic thermal press machine manufactured by SHINTO Metal Industries Corporation wherein the temperature was set at 20°C. Specimens for measurement were thus prepared. The heating plate used was an SUS plate having a thickness of 5 mm. The pressed sheets were heat treated at 120°C for one hour and were gradually and linearly cooled to room temperature in one hour, and then the density was measured using a density gradient column.

Melt Flow Rate (MFR)

The MFR was measured at 190°C under a load of 2.16 kg according to JIS K7210.

Melt Tension (MT)

The melt tension (MT) was measured with a melt tension tester manufactured by Toyo Seiki Seisaku-Sho, Ltd. The measurement conditions were as follows.

<Measurement Conditions>

The nozzle used: L=8.000 mm, D=2.095 mm, measurement temperature: 190°C, resin extrusion rate: 15 mm/min, resin take-off speed: 10 m/min.

Measurement Conditions fot Film Properties

[1] Measurement of Dart Impact Strength (DI) (Unit: g)

The DI was measured under the following conditions according to ASTM D1709.

Conditions: The specimen was fastened with an air clamp system and a hemispherical dart was dropped from a position at a fixed height. A load under which 50% of the specimen was broken was read out from a graph. The dropping was carried out 10 times with each load and method A was used.

[2] Measurement of Haze (Transparency, Unit: %)

The total haze and internal haze were measured according to ASTM D1003. For the internal haze, the film was placed in a cell filled with cyclohexanol, and then the measurement was made using a haze meter in the same

manner as in the haze.

[3] Measurement of Film Impact (FI) Strength

The film was allowed to stand still at 23±2°C and a relative humidity of 50±5% for 48 hours or more and then was cut into a size of 100x100 mm. The film thickness of the film samples (n=10) was measured with a dial gauge or a continuous thickness meter and an average thickness was determined.

The size volume and shape of an impact head of a film impact tester manufactured by Toyo Seiki Seisaku-Sho, Ltd. was selected depending on the samples. (In a typical measurement, the size volume of the impact head was 30 kg·cm and the shape of the impact head was 1/2 inch.)

The specimen was placed on a sample table of the film impact tester and fastened with air clamp. A pendulum was set at the starting position and an indicator needle was adjusted to the maximum scale. The stopper of the pendulum was removed and impact was applied to the sample and the sample was penetrated. The energy taken to break the sample was read out from the position of the needle to the 0.1 kg·cm.

The measurement was made for the ten samples and the film impact strength was calculated by the following equation.

$$FI=E/D$$

(FI: Film impact strength, E: Impact fracture energy, D: thickness of specimen)

<u>Production Method for Film</u>

[1] Inflation Molding (Monolayer)

The sample for measurement was shaped into a film having a thickness of 40 to 120 μm and a width of 320 mm by air-cooling inflation molding under the following molding conditions.

<Film Molding Conditions>

Molding machine: An inflation molding machine having a diameter of 50 mm manufactured by Modern Machinery Co., Ltd.
Screw: Barrier type screw
Die: 100 mm (diameter), 2.0 mm (lip width)
Air ring: 2-gap type
Molding temperature: 200°C
Extrusion rate: 28.8 kg/h
Take-up speed: 20 m/min (in the molding to a thickness of 40 μm)
10 m/min (in the molding to a thickness of 80 μm)
6.7 m/min (in the molding to a thickness of 120 μm)

[2] Inflation Molding (Multilayer)

The sample for measurement was shaped into a multilayer film having a thickness of 40 to 120 μm and a width of 710 mm by air-cooling inflation molding under the following molding conditions.

<Film Molding Conditions>

Molding machine: A three-layer inflation molding machine (three extruders with a diameter of 50 mm: manufactured by Alpine GmbH)
Screw: Barrier type screw
Die: 225 mm (diameter), 3.5 mm (lip width)

Air ring: 2-gap type
Molding temperature: 200°C
Extrusion rate: 100 kg/h (outermost layer: 25 kg/h, intermediate layer: 50 kg/h, innermost layer: 25 kg/h)
Take-up speed: 32 m/min (in the molding to a thickness of 40 μm)
10 m/min (in the molding to a thickness of 130 μm)

[3] Cast Molding (Monolayer)

The ethylene-α-olefin copolymer (E) or the ethylene-α-olefin copolymer (E1) may be generally cast-film extruded by extruding a molten resin at 170 to 250°C from a T-die and bringing it into contact with a chill roll at 20 to 100°C to solidify the copolymer into a film. For example, the cast film-forming was carried out as follows.

<Film Molding Conditions>

A monolayer cast film was prepared under the following conditions using only an intermediate layer extruder (65 mm in diameter) of a high speed multi-layer cast molding machine (manufactured by SHI Modern Machinery Ltd.)
Screw: L/D=32, T-die: coat hanger type, width: 800 mm Molding temperature: C1/C2/C3/C4/C5/AD/J =200/230/230/230/230/230/230°C
Extrusion rate: 70 kg/h
Chill roll temperature: 40°C, film thickness: 40 μm, Take-up speed: 50 m/min.

[Synthesis Example 1]

[Preparation of Solid Catalyst Component (α)]

8.5 kg of silica dried at 200°C for 3 hours was suspended in 33 liters of toluene, and then 82.7 liters of a methylaluminoxane solution (Al=1.42 mol/L) was added dropwise over 30 minutes to the suspension. Next, the resulting mixture was heated to 115°C in 1.5 hours and allowed to react at that temperature for 4 hours. Subsequently, the reaction mixture was cooled to 60°C and the supernatant liquid was removed by decantation. The resulting solid catalyst component was washed with toluene three times, and was resuspended in toluene to give a solid catalyst component (α) (the total volume: 150 liters).

[Preparation of Supported Catalyst]

To a reactor in which the air had been sufficiently replaced with nitrogen, 19.60 mol (in terms of aluminum) of the above-mentioned solid catalyst component (α) suspended in toluene was added. While stirring, to the resulting suspension, 2 liters (61.12 mmol) of 31.06 mmol/L solution of di(p-tolyl)methylene(cyclopentadienyl)(octamethyloctahydrodibenzofluorenyl) zirconium dichloride was added at room temperature (20 to 25°C), and the mixture was stirred for 60 minutes. After termination of the stirring, the supernatant liquid was removed by decantation and the mixture was washed with 40 liters of n-hexane twice. The resulting supported catalyst was reslurried in n-hexane to give a solid catalyst component (γ) as 25 liters of a catalyst suspension.

[Preparation of Solid Catalyst Component (δ) by Prepolymerization of Solid Catalyst Component (γ)]

To a reactor equipped with a stirrer, under a nitrogen atmosphere, 15.8 liters of purified n-hexane and the above-mentioned solid catalyst component (γ) were added, and then 5 mol of triisobutylaluminum was added. While stirring the resulting mixture, prepolymerization was carried out with ethylene so that 3 g of ethylene polymer was produced per gram of the solid component for 4 hours. The polymerization temperature was maintained at 20 to 25°C. After completion of the polymerization reaction, the stirring was stopped, and then the supernatant liquid was removed by decantation. The residue was washed with 35 liters of n-hexane 4 times. The resulting supported catalyst was suspended in 20 liters of n-hexane to give a solid catalyst component (δ) as a catalyst suspension.

[Example 1]

[Polymerization]

To a first polymerization reactor, 45 L/h of hexane, 0.050 mmol/h (in terms of Zr atom) of the solid catalyst component (δ) obtained in Synthesis Example 1, 4 mmol/h of triethylaluminum, 8.1 kg/h of ethylene, 251 g/h of 1-hexene and 40 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 7.5 kg/$cm^2$G and an average residence time of 2.5 hours. The unreacted ethylene and hydrogen were substantially removed from the contents continuously withdrawn from the first polymerization reactor in a flash drum maintained at an internal pressure of 0.30 kg/$cm^2$G and at 65°C.

After that, the contents were continuously supplied to a second polymerization reactor, together with 43 L/h of hexane, 5.7 kg/h of ethylene, 4 N-L/h of hydrogen and 892 g/h of 1-hexene, and polymerization was continuously carried out under the conditions of a polymerization temperature of 72°C, a reaction pressure of 7 kg/$cm^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

Then, to 100 parts by mass of the polymer particles, 0.2 part by mass of 6-[3-(3-t-butyl-4-hydroxy-5-methyl) propoxy]2,4,8,10-tet ra-t-butylbenz[d,f][1,3,2]-dioxaphosphepine as an antioxidant and 0.1 part by mass of calcium stearate were added. Next, a sample for measurement was prepared by pelletizing the resulting mixture at a temperature of 200°C and a resin extrusion rate of 25 kg/h using a single-screw extruder (a screw diameter of 65 mm, L/D=28) manufactured by Placo Co., Ltd. Further, a film was prepared by using the sample and the physical properties of the film were measured. The results are shown in Tables 1 and 2.

[Example 2]

[Polymerization]

To a first polymerization reactor, 45 L/h of hexane, 0.0110 mmol/h (in terms of Zr atom) of the solid catalyst component (δ) obtained in Synthesis Example 1, 20 mmol/h of triethylaluminum, 8.1 kg/h of ethylene, 149 g/h of 1-hexene and 50 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 7.5 kg/$cm^2$G and an average residence time of 2.5 hours. The unreacted ethylene and hydrogen were substantially removed from the contents continuously withdrawn from the first polymerization reactor in a flash drum maintained at an internal pressure of 0.30 kg/$cm^2$G and at 65°C.

Then, the contents were continuously supplied to a second polymerization reactor, together with 43 L/h of hexane, 49 kg/h of ethylene, 3 N-L/h of hydrogen and 204 g/h of 1-hexene, and polymerization was continuously carried out under the conditions of a polymerization temperature of 72°C, a reaction pressure of 7 kg/$cm^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

Then, 100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties of the film were measured. The results are shown in Tables 1 and 2.

[Example 3]

[Polymerization]

To a first polymerization reactor, 45 L/h of hexane, 0.20 mmol/h (in terms of Zr atom) of the solid catalyst component (δ) obtained in Synthesis Example 1, 20 mmol/h of triethylaluminum, 6.3 kg/h of ethylene, 91 g/h of 1-hexene and 40 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 7.5 kg/cm$^2$G and an average residence time of 2.5 hours. The unreacted ethylene and hydrogen were substantially removed from the contents continuously withdrawn from the first polymerization reactor in a flash drum maintained at an internal pressure of 0.30 kg/cm$^2$G and at 65°C.

Then, the contents were continuously supplied to a second polymerization reactor, together with 43 L/h of hexane, 9.4 kg/h of ethylene, 4 N-L/h of hydrogen and 495 g/h of 1-hexene, and polymerization was continuously carried out under the conditions of a polymerization temperature of 72°C, a reaction pressure of 7 kg/cm$^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried togive a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties of the film were measured. The results are shown in Tables 1 and 2.

[Example 4]

[Polymerization]

To a first polymerization reactor, 45 L/h of hexane, 0.075 mmol/h (in terms of Zr atom) of the solid catalyst component (5) obtained in Synthesis Example 1, 20 mmol/h of triethylaluminum, 8.1 kg/h of ethylene and 50 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 7.5 kg/cm$^2$G and an average residence time of 2.5 hours. The unreacted ethylene and hydrogen were substantially removed from the contents continuously withdrawn from the first polymerization reactor in a flash drum maintained at an internal pressure of 0.30 kg/cm$^2$G and at 65°C.

Then, the contents were continuously supplied to a second polymerization reactor, together with 43 L/h of hexane, 10.2 kg/h of ethylene, 35 N-L/h of hydrogen and 1378 g/h of 1-hexene, and polymerization was continuously carried out under the conditions of a polymerization temperature of 72°C, a reaction pressure of 7 kg/cm$^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties of the film were measured. The results are shown in Tables 1 and 2.

[Examples 5]

[Polymerization]

To a first polymerization reactor, 45 L/h of hexane, 0.080 mmol/h (in terms of Zr atom) of the solid catalyst

component (δ) obtained in Synthesis Example 1, 20 mmol/h of triethylaluminum, 8.1 kg/h of ethylene, 155 g/h of 1-hexene and 70 N-L/h of hydrogen were continuously supplied. Further, while continuously withdrawing the contents in the polymerization reactor so that the liquid level in the polymerization reactor was constant, polymerization was carried out under the conditions of a polymerization temperature of 75.5°C, a reaction pressure of 7.5 kg/cm$^2$G and an average residence time of 2.5 hours. The unreacted ethylene and hydrogen were substantially removed from the contents continuously withdrawn from the first polymerization reactor in a flash drum maintained at an internal pressure of 0.30 kg/cm$^2$G and at 65°C.

Then, the contents were continuously supplied to a second polymerization reactor, together with 43 L/h of hexane, 10.2 kg/h of ethylene, 20 N-L/h of hydrogen and 1295 g/h of 1-hexene, and polymerization was continuously carried out under the conditions of a polymerization temperature of 72°C, a reaction pressure of 7 kg/cm$^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties were measured. The results are shown in Tables 1 and 2.

[Example 6]

[Polymerization]

To a first polymerization reactor, 45 L/h of hexane, 0.080 mmol/h (in terms of Zr atom) of the solid catalyst component (δ) obtained in Synthesis Example 1, 20 mmol/h of triethylaluminum, 8.1 kg/h of ethylene, 155 g/h of 1-hexene and 70 N-L/h of hydrogen were continuously supplied. Further, while continuously withdrawing the contents in the polymerization reactor so that the liquid level in the polymerization reactor was constant, polymerization was carried out under the conditions of a polymerization temperature of 75.5°C, a reaction pressure of 7.5 kg/cm$^2$G and an average residence time of 2.5 hours. The unreacted ethylene and hydrogen were substantially removed from the contents continuously withdrawn from the first polymerization reactor in a flash drum maintained at an internal pressure of 0.30 kg/cm$^2$G and at 65°C.

Then, the contents were continuously supplied to a second polymerization reactor, together with 43 L/h of hexane, 10.2 kg/h of ethylene, 20 N-L/h of hydrogen and 1295 g/h of 1-hexene, and polymerization was continuously carried out under the conditions of a polymerization temperature of 72°C, a reaction pressure of 7 kg/cm$^2$G and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties were measured. The results are shown in Tables 1 and 3.

[Example 7]

[Pomymerization]

To a first polymerization reactor, 45 L/h of hexane, 0.080 mmol/h (in terms of Zr atom) of the solid catalyst component (δ) obtained in Synthesis Example 1, 20 mmol/h of triethylaluminum, 8.1 kg/h of ethylene, 155 g/h of 1-hexene and 70 N-L/h of hydrogen were continuously supplied. And further, while continuously withdrawing the contents in the polymerization reactor so that the liquid level in the polymerization reactor was constant, polymerization was carried out under the conditions of a polymerization temperature of 75.5°C, a reaction pressure of 7.5 kg/cm$^2$G and an

average residence time of 2.5 hours. The unreacted ethylene and hydrogen were substantially removed from the contents continuously withdrawn from the first polymerization reactor in a flash drum maintained at an internal pressure of 0.30 $kg/cm^2G$ and at 65°C.

Then, the contents were continuously supplied to a second polymerization reactor, together with 43 L/h of hexane, 10.2 kg/h of ethylene, 4 N-L/h of hydrogen and 1275 g/h of 1-hexene, and polymerization was continuously carried out under the conditions of a polymerization temperature of 72°C, a reaction pressure of 7 $kg/cm^2G$ and an average residence time of 1.5 hours.

In the second polymerization reactor too, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties of the film were measured. The results are shown in Tables 1 and 3.

[Example 8]

[Polymerization]

To a first polymerization reactor, 45 L/h of hexane, 0.075 mmol/h (in terms of Zr atom) of the solid catalyst component (δ) obtained in Synthesis Example 1, 20 mmol/h of triethylaluminum, 8.1 kg/h of ethylene and 50 N-L/h of hydrogen were continuously supplied. Further, while continuously withdrawing the contents in the polymerization reactor so that the liquid level in the polymerization reactor was constant, polymerization was carried out under the conditions of a polymerization temperature of 75.5°C, a reaction pressure of 7.5 $kg/cm^2G$ and an average residence time of 2.5 hours. The unreacted ethylene and hydrogen were substantially removed from the contents continuously withdrawn from the first polymerization reactor in a flash drum maintained at an internal pressure of 0.3 $kg/cm^2G$ and at 65°C.

Then, the contents were continuously supplied to a second polymerization reactor, together with 43 L/h of hexane, 10.2 kg/h of ethylene, 35 N-L/h of hydrogen and 1378 g/h of 1-hexene, and polymerization was continuously carried out under the conditions of a polymerization temperature of 72°C, a reaction pressure of 7 $kg/cm^2G$ and an average residence time of 1.5 hours.

In the second polymerization reactor, the contents in the polymerization reactor were continuously withdrawn so that the liquid level in the polymerization reactor was constant, and the hexane and unreacted monomer in the contents were removed by a solvent separator and then the contents were dried to give a polymer. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

Then, 100 parts by mass of the polymer particles were mixed with the antioxidant and calcium stearate used in Example 1. A sample for measurement was prepared by pelletizing the resulting mixture using a single-screw extruder manufactured by Placo Co., Ltd. Further, a film was prepared using the sample and the physical properties of the film were measured. The results are shown in Tables 1 and 4.

[Comparative Example 1]

A linear low-density polyethylene (trade name: GD 1588, manufactured by Prime Polymer Co. , Ltd.) was used as a sample for measurement. The results are shown in Tables 1 and 2.

[Comparative Example 2]

A film was prepared using a high density polyethylene (trade name: HIZEX HZ3300F, manufactured by Prime Polymer Co. , Ltd.) in the same manner as in Example 1 and the physical properties of the film were measured. The results are shown in Tables 1 to 3.

[Comparative Example 3]

A film was prepared using a linear low-density polyethylene (trade name: ULTZEX UZ4020L, manufactured

by Prime Polymer Co., Ltd.) in the same manner as in Example 1 and the physical properties of the film were measured. The results are shown in Tables 1 to 4.

[Comparative Example 4]

A film was prepared using a linear low-density polyethylene (trade name: MORETEC 0168N, manufactured by Prime Polymer Co., Ltd.) in the same manner as in Example 1 and the physical properties of the film were measured. The results are shown in Tables 1, 2 and 4.

[Table 1]

| | Ethylene-α-olefin copolymer (E) | | | | | | | Polymer (A) | | | | Polymer (B) | | | |
|---|---|---|---|---|---|---|---|---|---|---|---|---|---|---|---|
| | MFR | [η] | density | Mw/Mn | CFC Parameter | MT | Amount soluble in decane | $[\eta]_A$ | Density | Mw/Mn | Ratio | $[\eta]_B$ | Density | Mw/Mn | $[\eta]_B/[\eta]_A$ |
| | g/10 min | dl/g | $kg/m^3$ | - | °C | mN | % by mass | dl/g | $kg/m^3$ | - | % by mass | dl/g | $kg/m^3$ | - | |
| Example 1 | 0.46 | 2.0 | 929 | 3.7 | 10.1 | 63 | <0.5 | 1.1 | 941 | 2.2 | 40 | 2.1 | 921 | 2.2 | 1.9 |
| Example 2 | 0.17 | 2.4 | 943 | 4.6 | 7.1 | 97 | <0.5 | 0.9 | 956 | 2.2 | 52 | 3.9 | 929 | 2.2 | 4.1 |
| Example 3 | 0.30 | 2.3 | 937 | 2.6 | 8.4 | 80 | <0.5 | 1.5 | 951 | 2.2 | 40 | 2.8 | 929 | 2.2 | 1.9 |
| Example 4 | 0.80 | 1.9 | 941 | 3.3 | - | 47 | <0.5 | 1.0 | 972 | 2.2 | 44 | 2.5 | 918 | 2.2 | 2.5 |
| Example 5 | 0.16 | 2.3 | 933 | 4.9 | 9.2 | 94 | <0.5 | 0.8 | 959 | 2.2 | 44 | 3.4 | 913 | 2.2 | 4.2 |
| Example 6 | 0.19 | 2.4 | 934 | - | - | 91 | <0.5 | 0.9 | 956 | 2.2 | 51 | 3.6 | 914 | 2.2 | 4.0 |
| Example 7 | 0.07 | 2.9 | 934 | - | | 137 | <0.5 | 0.9 | 958 | 2.2 | 51 | 4.9 | 910 | 2.2 | 5.4 |
| Example 8 | 1.10 | 1.5 | 938 | 3.3 | 6.1 | 36 | <0.5 | 1.0 | 972 | 2.2 | 44 | 2.4 | 916 | 2.2 | 2.4 |
| Comparative Example 1 | 2.3 | 1.7 | 927 | 3.2 | 24.0 | 15 | | | | | | | | | |
| Comparative Example 2 | 1.1 | 2.2 | 950 | 3.8 | 18.2 | 30 | | | | | | | | | |
| Comparative Example 3 | 2.3 | 1.7 | 937 | 2.6 | 16.0 | 17 | | | | | | | | | |
| Comparative Example 4 | 1.2 | 1.9 | 938 | - | - | 30 | | | | | | | | | |

[Table 2]

| | Film Properties(40μ) | | | Film Properties(80μ) | | | Film Properties(120μ) | | |
|---|---|---|---|---|---|---|---|---|---|
| | DI | Total Haze | Internal Haze | DI | Total Haze | Internal Haze | DI | Total Haze | Internal Haze |
| Example 1 | 256 | 10 | 2.0 | 520 | 14.3 | 3.3 | 870 | 14 | 4.9 |
| Example 2 | 105 | 40 | 3.8 | | | | 430 | 38 | 9.5 |
| Example 3 | 144 | 18 | 2.3 | 325 | 17.2 | 4.4 | 672 | 20 | 7.5 |
| Example 4 | 213 | 22 | 6.5 | | | | 720 | 28 | 20.5 |
| Example 5 | 387 | 39 | 2.3 | | | | 948 | 48 | 7.6 |
| Comparative Example 1 | 350 | 41 | 12.5 | Unmoldable | | | Unmoldable | | |
| Comparative Example 2 | 68 | 20 | 4.5 | 150 | 28 | 11 | Unmoldable | | |
| Comparative Example 3 | 80 | 8 | 2.5 | 128 | 11.5 | 4.0 | Unmoldable | | |
| Comparative Example 4 | 81 | 13 | 1.5 | | | | Unmoldable | | |

[Table 3]

| | Film Properties (40μ) | | | Film Properties (130μ) | | |
|---|---|---|---|---|---|---|
| | DI | Total Haze | Internal Haze | DI | Total Haze | Internal Haze |
| Example 6 | 337 | 5 | 2.3 | 860 | 21 | 15.5 |
| Example 7 | 264 | 5 | 2.3 | 911 | 18 | 15.2 |
| Comparative Example 2 | 108 | 6 | 3.0 | 303 | 22.8 | 18.8 |
| Comparative Example 3 | 129 | 5 | 1.7 | 554 | 18 | 15.6 |

[Table 4]

| | Film Properties (40μ) | | |
|---|---|---|---|
| | DI | Total Haze | Internal Haze |
| Example 8 | 190 | 8 | 2.5 |
| Comparative Example 4 | 74 | 4 | 1.7 |

[Example 9]

[Polymerization]

To a polymerization reactor, 45 L/h of hexane, 0.13 mmol/h (in terms of Zr atom) of the solid catalyst component (δ) obtained in Synthesis Example 1, 20 mmol/h of triethylaluminum, 8.1 kg/h of ethylene and 50 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 8.5 kg/$cm^2$G and an average residence time of 2.5 hours. In order

to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

To 100 parts by mass of the polymer particles, 0.2 part by mass of 6-[3-(3-t-butyl-4-hydroxy-5-methyl)propoxy] 2,4,8,10-tet ra-t-butylbenz[d,f][1,3,2]-dioxaphosphepine as an antioxidant and 0.1 part by mass of calcium stearate were added. Next, a sample for measurement was prepared by pelletizing the resulting mixture at a temperature of 200°C and a resin extrusion rate of 25 kg/h using a single-screw extruder (a screw diameter of 65 mm, L/D=28) manufactured by Placo Co., Ltd. Further, a film was prepared by using the sample and the physical properties of the film were measured. The property values of the polymer are shown in Tables 5 and 6 and the physical property values of the film are shown in Table 7.

[Example 10]

[Polymerization]

To a polymerization reactor, 45 L/h of hexane, 0.17 mmol/h (in terms of Zr atom) of the solid catalyst component (δ) obtained in Synthesis Example 1, 20 mmol/h of triethylaluminum, 8.1 kg/h of ethylene and 50 N-L/h of hydrogen were continuously supplied. Further, while continuously withdrawing the contents in the polymerization reactor so that the liquid level in the polymerization reactor was constant, polymerization was carried out under the conditions of a polymerization temperature of 75°C, a reaction pressure of 8.5 kg/cm$^2$G and an average residence time of 2.5 hours. In order to prevent unintended polymerization, 2 L/h of methanol was supplied to the contents withdrawn from the polymerization reactor to deactivate the catalyst for polymerization. Subsequently, the hexane and unreacted monomer in the contents were removed by a solvent separator and then the contents were dried to give a polymer.

A sample for measurement was prepared by pelletizing the resulting mixture using a single screw extruder manufactured by Placo Co., Ltd. in the same manner used in Example 9. Further, a film was prepared by using the sample and the physical properties of the film were measured. The property values of the polymer are shown in Tables 5 and 6 and the physical property values of the film are shown in Table 7.

[Example 11]

[Polymerization]

To a polymerization reactor, 45 L/h of hexane, 0.15 mmol/h (in terms of Zr atom) of the solid catalyst component (δ) obtained in Synthesis Example 1, 20 mmol/h of triethylaluminum, 8. 1 kg/h of ethylene, 50 N-L/h of hydrogen and 117 g/h of 1-hexene were continuously supplied. Further, while continuously withdrawing the contents in the polymerization reactor so that the liquid level in the polymerization reactor was constant, polymerization was carried out under the conditions of a polymerization temperature of 75°C, a reaction pressure of 8.5 kg/cm$^2$G and an average residence time of 2.5 hours. In order to prevent unintended polymerization, 2 L/h of methanol was supplied to the contents withdrawn from the second polymerization reactor to deactivate the catalyst for polymerization. Subsequently, the hexane and unreacted monomer in the contents were removed by a solvent separator and then the contents were dried to give a polymer.

A sample for measurement was prepared by pelletizing the resulting mixture using a single-screw extruder manufactured by Placo Co., Ltd. in the same manner used in Example 9. Further, a film was prepared by using the sample and the physical properties of the film were measured. The property values of the polymer are shown in Tables 5 and 6 and the physical property values of the film are shown in Table 7.

[Example 12]

[Polymerization]

To a polymerization reactor, 45 L/h of hexane, 0.10 mmol/h (in terms of Zr atom) of the solid catalyst component (δ) obtained in Synthesis Example 1, 20 mmol/h of triethylaluminum, 8.1 kg/h of ethylene, 100 N-L/h of hydrogen and 233 g/h of 1-hexene were continuously supplied. Further, while continuously withdrawing the contents in the polymerization reactor so that the liquid level in the polymerization reactor was constant, polymerization was carried out under the conditions of a polymerization temperature of 75°C, a reaction pressure of 8.5 kg/cm$^2$G and an average residence time of 2.5 hours. In order to prevent unintended polymerization, 2 L/h of methanol was supplied to the contents withdrawn from the second polymerization reactor to deactivate the catalyst for polymerization. Subsequently, the hexane and unreacted monomer in the contents were removed by a solvent separator and then the contents were dried to give a

polymer.

A sample for measurement was prepared by pelletizing the resulting mixture using a single-screw extruder manufactured by Placo Co., Ltd. in the same manner used in Example 9. Further, a film was prepared by using the sample and the physical properties of the film were measured. The property values of the polymer are shown in Tables 5 and 6 and the physical property values of the film are shown in Table 7.

[Comparative Example 5]

A film was prepared using a high density polyethylene (trade name: HIZEX HZ3300F, manufactured by Prime Polymer Co., Ltd.) in the same manner as in Example 9 and the physical properties of the film were measured. The property values of the polymer are shown in Tables 5 and 6 and the physical property values of the film are shown in Table 7.

[Comparative Example 6]

A film was prepared using a linear low-density polyethylene (trade name: ULTZEX UZ4020L, manufactured by Prime Polymer Co., Ltd.) in the same manner as in Example 9 and the physical properties of the film were measured. The property values of the polymer are shown in Tables 5 and 6 and the physical property values of the film are shown in Table 7.

[Comparative Example 7]

A film was prepared using a high density polyethylene (trade name: HIZEX HZ2200J, manufactured by Prime Polymer Co., Ltd.) in the same manner as in Example 9 and the physical properties of the film were measured. The property values of the polymer are shown in Tables 5 and 6 and the physical property values of the film are shown in Table 7.

[Table 5]

| | [η] dl/g | Density kg/$m^3$ | Mw/Mn - | α-olefin | α-olefin content % by mol |
|---|---|---|---|---|---|
| Example 9 | 1.7 | 964 | 3.3 | None | 0.0 |
| Example 10 | 1.5 | 967 | 3.3 | None | 0.0 |
| Example 11 | 1.4 | 953 | 3.6 | 1-hexene | 0.3 |
| Example 12 | 1.8 | 944 | 3.5 | 1-hexene | 0.5 |
| Comparative Example 5 | 2.2 | 950 | 5.3 | Propylene | 0.5 |
| Comparative Example 6 | 2.3 | 937 | 2.6 | 4-Methyl-1-pentene | 0.7 |
| Comparative Example 7 | 1.5 | 964 | 8.1 | None | 0.0 |

[Table 6]

| | Elution temperature range in the elution amount of 5 to 50 wt% | MT g (mN) (Note) | MFR g/10 min |
|---|---|---|---|
| Example 9 | 4.3 | 1 (10) | 2.3 |
| Example 10 | 4.1 | 0.6 (5.5) | 5.1 |
| Example 11 | 5.2 | 0.6 (6) | 5.0 |
| Example 12 | 6.0 | 2.2 (22) | 1.5 |
| Comparative Example 5 | 12.8 | 3.1 (30) | 1.1 |
| Comparative Example 6 | - | 2 (20) | 2.3 |

(continued)

| | Elution temperature range in the elution amount of 5 to 50 wt% | MT g (mN) (Note) | MFR g/10 min |
|---|---|---|---|
| Comparative Example 7 | 14.5 | 1 (10) | 5.2 |
| Note) MT of mN (millinewton) unit is a product of MT of g (gram) unit multiplied by 9.8. | | | |

[Table 7]

| | Total Haze % | Film Impact Strength kJ/m | Evaluation of Powder Adhesion (Note) |
|---|---|---|---|
| Example 9 | 13 | 9 | 4 |
| Example 10 | 22 | 8 | 5 |
| Example 11 | 20 | 7 | 5 |
| Example 12 | 10 | 11 | 5 |
| Comparative Example 5 | 6 | 13 | 2 |
| Comparative Example 6 | 4 | 15 | 3 |
| Comparative Example 7 | 11 | 7 | 1 |
| Note) Visual evaluation score<br>[Heavy] 1<2<3<4<5 [Minor] | | | |

[INDUSTRIAL APPLICABILITY]

The ethylene-α-olefin copolymer (E) of the present invention may be shaped into films by inflation molding, water-cooling inflation molding, cast molding, extrusion lamination molding and the like, sheets, blow molded articles, extrusion molded articles such as pipes, profiles and the like, foamed molded articles, injection molded articles and the like. In addition, the ethylene-α-olefin copolymer (E) of the present invention may be used for fibers, monofilaments, nonwoven fabrics and the like. These articles include articles containing a part composed of the ethylene-α-olefin copolymer and a part composed of other resins (laminates and the like). Further, the ethylene-α-olefin copolymer which is crosslinked during the molding process may be used. The films of the ethylene-α-olefin copolymer according to the present invention obtained by inflation molding, cast molding, extrusion lamination molding and the like has excellent properties, among the above molded articles.

The film or sheet of the present invention is suitably used for a heavy-duty packaging film, a compression packaging film, a plastic shopping bag, a standardized bag, a laminate film, a retort film, a food film, a protect film (including a process paper for electronic components and building materials), a film for packaging electronic components, a shrinkable film (including a label), a medical film (including an infusion solution bag), a packaging material for industrial chemicals, a bag-in-box, an agricultural film (a greenhouse film, a rain-proof film, a multi-film), industrial materials (including a liner sheet), a γ-ray film and the like.

**Claims**

**1.** An ethylene-α-olefin copolymer for a film or sheet satisfying the following requirements [1] to [5] simultaneously:

[1] the density (d) is in the range of 890 to 980 $kg/m^3$;
[2] the intrinsic viscosity ([η]) measured at 135°C in decalin is in the range of 0.5 to 10 dl/g;
[3] the ratio of weight average molecular weight (Mw) to number average molecular weight (Mn) (Mw/Mn) measured by GPC is in the range of 2.0 to 50;
[4] in an elution temperature-eluation amount curve given by cross fractionation chromatography (CFC), the difference between a temperature at which the integrated elution amount is 1% by mass and a temperature at which the integrated elution amount is 40% by mass is 12°C or less, wherein the total elution amount is 100% by mass; and

[5] the amount of a component soluble in decane is 0.5% by mass or less.

**2.** The ethylene-α-olefin copolymer for a film or sheet according to claim 1, wherein the copolymer comporises 80 to 20% by mass of the following ethylene-α-olefin copolymer (A), and 20 to 80% by mass of the following ethylene-α-olefin copolymer (B), the ethylene-α-olefin copolymer (A) comprising ethylene and an α-olefin having 3 to 10 carbon atoms, and having a density ($d_A$) of 910 to 980 kg/$m^3$, an intrinsic viscosity ($[\eta]_A$) of 0.5 to 3.0 dl/g as measured at 135°C in decalin, and a (Mw/Mn) of 1.5 to 5.0, the ethylene-α-olefin copolymer (B) comprising a copolymer of ethylene and an α-olefin having 3 to 10 carbon atoms, and having a density ($d_B$) of 880 to 950 kg/$m^3$, an intrinsic viscosity ($[\eta]_B$) of 1.0 to 10.0 dl/g as measured at 135°C in decalin, and a (Mw/Mn) of 1.5 to 5.0; and further wherein the copolymer satisfies the following equation (Eq-1),

$$([\eta]_B)/([\eta]_A)>1 \quad \ldots \quad (Eq-1).$$

**3.** The ethylene-α-olefin copolymer for a film or sheet according to claim 1 or 2, wherein the melt tension (MT) at 190°C is 20 mN or more.

**4.** A film or sheet obtained from the ethylene-α-olefin copolymer (E) according to any of claims 1 to 3.

**5.** A wrapping bag, sheet or bag comprising the film or sheet according to claim 4.

**6.** A laminate comprising at least one layer of the film or sheet according to claim 4.

**INTERNATIONAL SEARCH REPORT**

International application No.
PCT/JP2007/052651

A. CLASSIFICATION OF SUBJECT MATTER
*C08F10/02*(2006.01)i, *B32B27/32*(2006.01)i, *C08J5/18*(2006.01)i, *C08L23/08*(2006.01)i

According to International Patent Classification (IPC) or to both national classification and IPC

B. FIELDS SEARCHED

Minimum documentation searched (classification system followed by classification symbols)
C08C19/00-19/44, C08F4/60-4/70, C08F6/00-283/00, C08F283/02-289/00, C08F291/00-297/08, C08F301/00, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2005-314680 A (Mitsui Chemicals, Inc.),<br>10 November, 2005 (10.11.05),<br>Claims 1 to 2; Par. Nos. [0100], [0103], [0070]<br>& WO 2005/100410 A1 | 1,3-6<br>2 |
| X<br>A | JP 2004-238520 A (Mitsui Chemicals, Inc.),<br>26 August, 2004 (26.08.04),<br>Claims 1 to 8; Par. Nos. [0069], [0071], [0072], [0082] to [0089], [0103] to [0105]<br>(Family: none) | 1,3-6<br>2 |
| A | JP 2005-239750 A (Mitsui Chemicals, Inc.),<br>08 September, 2005 (08.09.05),<br>Full text<br>(Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 May, 2007 (14.05.07) | Date of mailing of the international search report<br>29 May, 2007 (29.05.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/052651

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-304830 A (Mitsui Petrochemical Industries, Ltd.), 21 November, 1995 (21.11.95), Full text (Family: none) | 1-6 |
| A | WO 2004/029062 A1 (Mitsui Chemicals, Inc.), 08 April, 2004 (08.04.04), Full text & JP 2004-168744 A & JP 2004-182715 A & US 2006/161013 A1 & EP 1548018 A1 | 1-6 |
| A | JP 2006-28449 A (Mitsui Chemicals, Inc.), 02 February, 2006 (02.02.06), Full text (Family: none) | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5690810 B
- JP S60106806 B
- JP H0278687 B
- JP H01501950 B
- JP H01502036 B
- JP H03179005 B
- JP H03179006 B
- JP H03207703 B
- JP H03207704 B
- US 5321106 A


### Non-patent literature cited in the description


- NMR - Sosetsu to Jikken Gaido [I. Kagaku no Ryoiki. vol. 141, 132-133